# EUROPÄISCHE PATENTANMELDUNG

(11) **EP 4 656 504 A1**
(43) Veröffentlichungstag der Anmeldung: **03.12.2025**
(21) Anmeldenummer: 25168163.1
(22) Anmeldetag: 03.04.2025
(51) Int. Cl.: B62J 43/13, B62J 43/23, B62J 43/28, B62K 19/40, B62M 6/90, H01M 50/271, H01M 50/249

(54) **BATTERIEFACH IM RAHMENROHR EINES FAHRZEUGES UND FAHRZEUG**

(30) Priorität: 31.05.2024 DE 202024102862 U
(71) Anmelder: Kalkhoff Werke GmbH, 49685 Emstek (DE)
(72) Erfinder: SCHLEGEL, Michael, 28355 Bremen (DE)
(74) Vertreter: Jabbusch, Matthias

(57) **Zusammenfassung**

Bei einem Batteriefach im Rahmenrohr eines Fahrzeuges für zumindest einen Akkumulator ist vorgesehen, dass das Batteriefach wenigstens einen Deckel aufweist, dass der Deckel als Rahmenrohrabschnitt ausgebildet ist und am Rahmenrohr schwenkbar angelenkt ist.

Dieses Batteriefach ermöglicht eine einfache Entnahme des Akkumulators, fügt sich im Übrigen aber in die Gestaltung des Fahrradrahmens ein.

Weiterhin wird ein manuell bewegbares Fahrzeug aufgezeigt, das ein derartiges Batteriefach hat.

## Beschreibung

Die Erfindung betrifft ein Batteriefach im Rahmenrohr eines Fahrzeuges für zumindest einen Akkumulator. Die Erfindung betrifft des Weiteren ein Fahrzeug, vorzugsweise ein Fahrrad.

Manuell bewegbare Fahrzeuge, beispielsweise Fahrräder oder auch Dreiräder, werden grundsätzlich beispielsweise durch Pedalbewegungen bewegt. Seit vielen Jahren sind für derartige Fahrzeuge zusätzliche Batterien und Akkumulatoren sowie Elektromotoren entwickelt worden, welche die für die Bewegung des Fahrzeuges aufzuwendenden Kraft reduzieren.

Entsprechende Akkumulatoren können zum Beispiel bei einem Fahrrad im Bereich eines Heckgepäckträger oder auch in einem Rahmendreieck in der Nähe des Tretlagers angeordnet sein. Vorgeschlagen wurde auch schon, Akkumulatoren in den Verlauf eines Rahmenrohres anzusetzen, sie wurden auch schon innerhalb von Rahmenrohren angeordnet, beispielsweise in Oberrohren von Fahrradrahmen.

Gerade bei einer Anordnung im Rahmenrohr ist die Außengestaltung des Rahmenrohres nicht beeinträchtigt. Das Herausholen des Akkumulators aus dem Rahmenrohr kann dann aber erschwert sein.

Der Erfindung liegt die Aufgabe zugrunde, ein Batteriefach der eingangs genannten Gattung aufzuzeigen, das eine einfache Entnahme des Akkumulators ermöglicht, sich im Übrigen aber in die Gestaltung des Fahrradrahmens einfügt. Weiterhin soll ein manuell bewegbares Fahrzeug, insbesondere ein Fahrrad, aufgezeigt werden.

Hinsichtlich des Batteriefaches ist diese Aufgabe erfindungsgemäß dadurch gelöst, dass Batteriefach zumindest einen Deckel aufweist, dass der Deckel als Rahmenrohrabschnitt ausgebildet ist und am Rahmenrohr schwenkbar angelenkt ist.

Das erfindungsgemäße Batteriefach ist in einem Rahmenrohr angeordnet und mit einem Deckel ausgerüstet. Dieser Deckel ist erfindungsgemäß als ein Abschnitt des Rahmenrohres ausgebildet. Im geschlossenen Zustand kann der Deckel sich in das Rahmenrohr einfügen, da er am Rahmenrohr schwenkbar angelenkt ist. Der Deckel kann in eine offene Stellung geschwenkt werden, in der der Akkumulator aus dem Rahmenrohr entnommen werden kann oder auch in das Rahmenrohr eingeführt werden kann. Der Deckel ist in die geschlossene Stellung verschwenkbar, der Rahmenrohrabschnitt ist dann wieder an das Rahmenrohr angelegt und kann dies insgesamt vervollständigen.

Nach einer ersten Weiterbildung der Erfindung ist vorgesehen, dass der Deckel bei einem in Fahrposition befindlichen Fahrzeug in einem seitlichen Bereich des Rahmenrohres angeordnet ist. Der Deckel wird also an einer unauffälligen Position des Rahmenrohres angeordnet. Die obere und somit eher sichtbare Seite des Rahmenrohres bleibt unversehrt.

Das Rahmenrohr ist vorzugsweise ein Unterrohr des Fahrzeuges. Unterrohre beispielsweise in Fahrradrahmen haben häufig einen vergrößerten Durchmesser, so dass sie in der Lage sind, einen ausreichend dimensionierten Akkumulator aufzunehmen.

Der Deckel ist vorzugsweise über Scharniere am Rahmenrohr angelenkt. Rahmenrohr und Deckel sind über die Scharniere vorzugsweise unverlierbar miteinander verbunden. Die Scharniere sind vorzugsweise im Bereich eines unteren Längsrandes des Deckels am Rahmenrohr angeordnet. Der Deckel kann über die am unteren Längsrand angeordneten Scharniere beispielsweise in eine horizontale Lage geschwenkt werden.

Konstruktiv kann vorgesehen sein, dass jedes Scharnier einen Stift umfasst, auf dem der Deckel schwenkbar angelenkt ist. Es kann ein weiterer Stift als Schwenkbegrenzungselement vorgesehen sein.

Eine weitere Weiterbildung der Erfindung kann vorsehen, dass an dem oberen Rand des Deckels Verschlusselemente zur verschlossenen Anlage des Deckels am Rahmenrohr angeordnet sind. Mit dem oberen Rand wird der Deckel also mit dem Rahmenrohr verbunden, die Verbindung am unteren Rand des Deckels ist über die Scharniere gewährleistet.

Im Rahmenrohr kann bei dieser Ausgestaltung zumindest eine Schiebekulisse angeordnet sein, die mit den Verschlusselementen des Deckels in Verschluss bringbare Abschnitte aufweist. Durch ein Verschieben der Schiebekulisse werden die Verschlusselemente des Deckels freigegeben oder verschlossen. Bei einer Freigabe kann der Deckel aufgeschwenkt werden und der Akkumulator zum Beispiel entnommen werden. Bei einem Verschluss liegt der Deckel am Rahmenrohr an und der Akkumulator ist sicher eingehaust. Der Verschluss wird durch geeignete Hinterschneidungen gewährleistet.

Zur weiteren Ausbildung kann vorgesehen sein, dass die Schiebekulisse einen aus dem Rahmenrohr durch wenigstens einen Durchbruch nach außen vorstehenden Bedienungsabschnitt hat. Dieser Bedienungsabschnitt ist mit der Schiebekulisse verbunden, eine Betätigung des Bedienungsabschnittes in einer Schieberichtung führt zu einem Verschieben der Schiebekulisse innerhalb des Rahmenrohres. Die Schiebekulisse ist vorzugsweise federbelastet, eine Freigabe des Deckels erfolgt gegen eine Federkraft. Die Schiebekulisse wird durch die Federkraft in ihre Ausgangsposition gebracht.

Bei einem Schließen des Deckels ist keine Bewegung der Schiebekulisse erforderlich.

Eine Lösung der Aufgabe hinsichtlich eines Fahrzeuges ist nach der Erfindung dadurch gekennzeichnet, dass zumindest ein Batteriefach wie vorgeschrieben vorhanden ist.

Ein Ausführungsbeispiel des erfindungsgemäßen Batteriefach ist in der Zeichnung dargestellt. Es zeigen:
- Figur 1: eine perspektivische Ansicht eines Rahmenrohres,
- Figur 2: eine Schnittansicht des Rahmenrohres nach Figur 1,
- Figur 3: eine weitere perspektivische Ansicht des Rahmenrohres gemäß Figur 1,
- Figur 4: eine perspektivische Ansicht des Rahmenrohres gemäß Figur 1 während der Öffnung eines Deckels,
- Figur 5: eine perspektivische Ansicht des Rahmenrohres gemäß Figur 1 während der Herausnahme eines Akkumulators,
- Figur 6: eine perspektivische Teilansicht des Rahmenrohres und des Deckels und
- Figur 7: eine perspektivische Teilschnittansicht des Rahmenrohres.

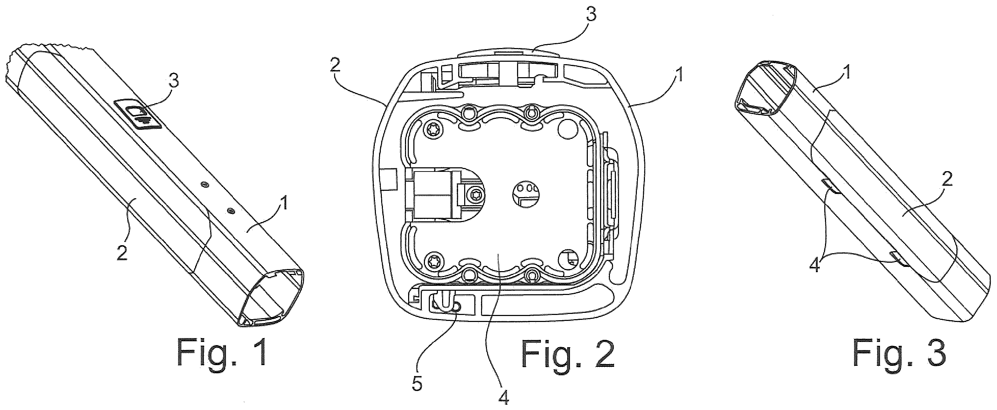

Das in Figur 1 gezeigte Rahmenrohr 1 ist beispielsweise das Unterrohr eines Fahrrades. In einer seitlichen Seitenwand des Rahmenrohrs 1 ist in dieses ein Deckel 2 eingelassen. Der Deckel 2 ist als Rahmenrohrabschnitt ausgebildet.

Auf der Oberseite des Rahmenrohres 1 ist noch ein Bedienungsabschnitt 3 für eine innerhalb des Rahmenrohres angeordnete Schiebekulisse ersichtlich.

Das Rahmenrohr 1 ist auch in Figur 2 gezeigt. Im Inneren des Rahmenrohres 1 ist ein Akkumulator 4 aufgenommen. Der Deckel 2 verschließt das Rahmenrohr 1, der Deckel 2 ist dabei in einem Scharnier 5 aufgenommen, die bereits angesprochene Schiebekulisse 6 ist im oberen Bereich des Rahmenrohrs 1 angeordnet und mit dem Bedienungsabschnitt 3 verbunden.

Figur 3 zeigt noch einmal die quasi nahtlose Integrierung des Deckels 2 in das Rahmenrohr 1. Die Scharniere 5 sind erkennbar.

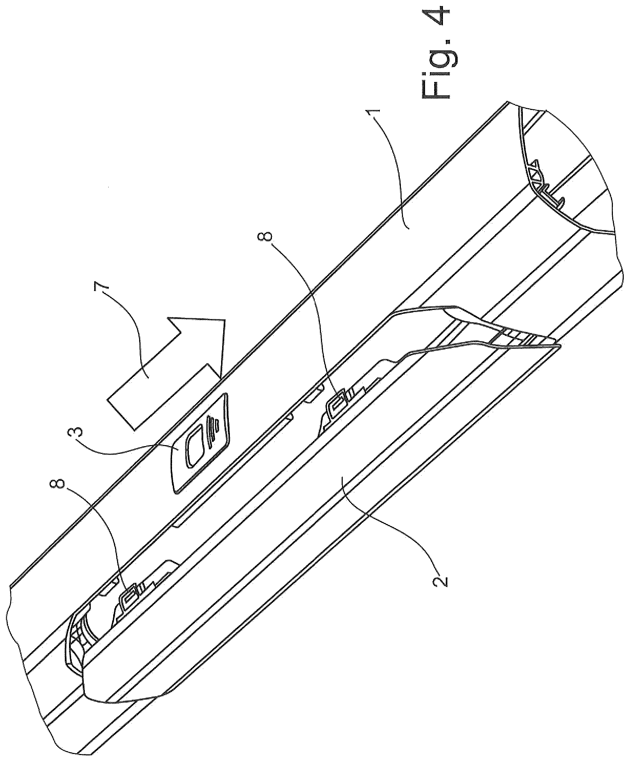

Wird wie in Figur 4 mit einem Pfeil 7 verdeutlicht der Bedienungsabschnitt 3 betätigt, werden Verschlusselemente 8 am oberen Rand des Deckels 2 von der Schiebekulisse 6 freigegeben und der Deckel 2 öffnet sich.

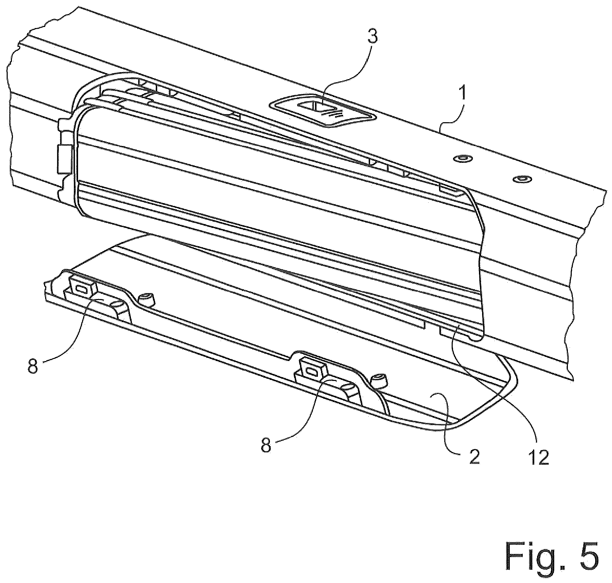

Figur 5 zeigt eine weite Öffnung des Deckels 2. Der Akkumulator 4 kann aus dem Rahmenrohr 1 entnommen werden. Im Rahmenrohr 1 ist eine Auflage 12 für den Akkumulator 4 erkennbar, diese deckt auch die Scharniere 5 ab.

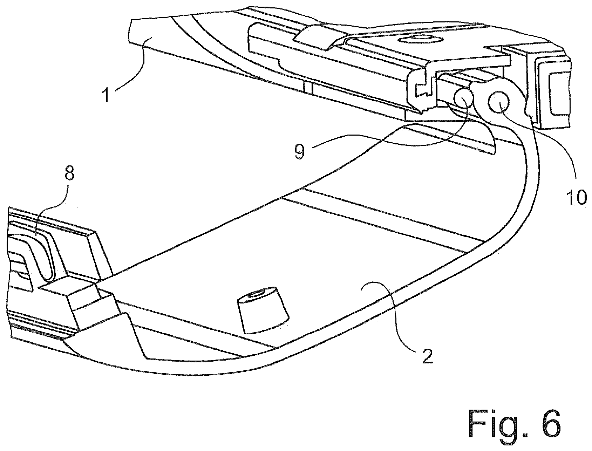

In Figur 6 ist noch einmal die geöffnete Stellung des Deckels 2 erkennbar. Der Deckel 2 ist auf einem Stift des Scharniers 5 angeordnet, ein weiterer Stift 9 dient als Schwenkbegrenzung, da in den Deckel 2 eine Nase 10 eingearbeitet ist, die am Stift 9 anschlägt.

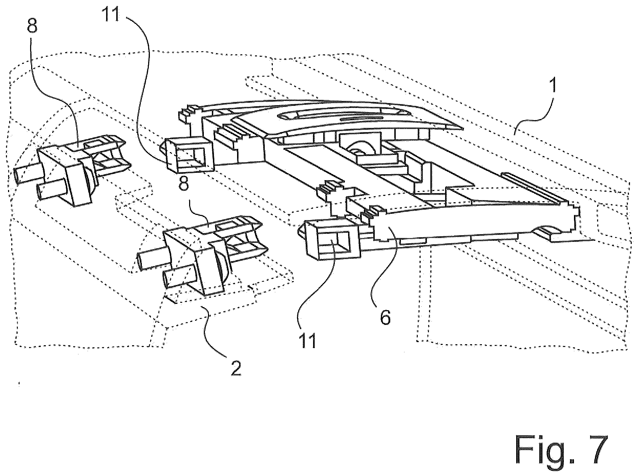

Der Deckel 2 ist mit seinen Verschlusselemente 8 noch einmal in Figur 7 gezeigt. Figur 7 zeigt zudem die Schiebekulisse 6, die mit den Verschlusselementen 8 in Eingriff bringbare Verschlussteile 11 aufweist. Bei einem Verschieben der Schiebekulisse 6 werden die Verschlussteile 11 mit verschoben, sie rasten entweder in die Verschlusselemente 8 ein oder sie geben diese, wie in Figur 7 gezeigt, frei.

## Patentansprüche

1. Batteriefach im Rahmenrohr eines Fahrzeuges für zumindest einen Akkumulator,
**dadurch gekennzeichnet,**
**dass** das Batteriefach wenigstens einen Deckel (2) aufweist, dass der Deckel (2) als Rahmenrohrabschnitt ausgebildet ist und am Rahmenrohr (1) schwenkbar angelenkt ist.

2. Batteriefach nach Anspruch 1, **dadurch gekennzeichnet, dass** der Deckel (2) bei einem in Fahrposition befindlichen Fahrzeug in einem seitlichen Bereich des Rahmenrohres (1) angeordnet ist.

3. Batteriefach nach Anspruch 1 oder 2, **dadurch gekennzeichnet, dass** das Rahmenrohr (1) ein Unterrohr des Zweirades ist.

4. Batteriefach nach Anspruch 2 oder 3, **dadurch gekennzeichnet, dass** der Deckel (2) über Scharniere (5) am Rahmenrohr (1) angelenkt ist.

5. Batteriefach nach Anspruch 4, **dadurch gekennzeichnet, dass** die Scharniere (5) im Bereich eines unteren Längsrandes des Deckels (2) am Rahmenrohr (1) angeordnet sind.

6. Batteriefach nach Anspruch 5, **dadurch gekennzeichnet, dass** jedes Scharnier (5) einen Stift umfasst, auf dem der Deckel (2) schwenkbar angelenkt ist.

7. Batteriefach nach Anspruch 6, **dadurch gekennzeichnet, dass** das Scharnier (5) einen weiteren Stift (9) als Schwenkbegrenzungselement aufweist.

8. Batteriefach nach einem der Ansprüche 2 bis 7, **dadurch gekennzeichnet, dass** an dem oberen Rand des Deckels (2) Verschlusselemente (8) zur verschlossenen Anlage des Deckels (2) am Rahmenrohr (1) angeordnet sind.

9. Batteriefach nach Anspruch 8, **dadurch gekennzeichnet, dass** im Rahmenrohr (1) zumindest eine Schiebekulisse (6) angeordnet ist, die mit den Verschlusselementen (8) des Deckels (2) in Verschluss bringbare Abschnitte (Verschlussteile 11) aufweist.

10. Batteriefach nach Anspruch 9, **dadurch gekennzeichnet, dass** die Schiebekulisse (6) einen aus dem Rahmenrohr (1) durch wenigstens einen Durchbruch nach außen vorstehenden Bedienungsabschnitt hat.

11. Batteriefach nach Anspruch 9 oder 10, **dadurch gekennzeichnet, dass** die Schiebekulisse (6) federbelastet ist.

12. Fahrzeug, **gekennzeichnet durch** zumindest ein Batteriefach nach einem der Ansprüche 1 bis 11.
